# EUROPÄISCHE PATENTSCHRIFT

(11) **EP 0 967 232 B1**
(45) Veröffentlichungstag und Bekanntmachung des Hinweises auf die Patenterteilung: **31.08.2005**
(21) Anmeldenummer: 99112059.3
(22) Anmeldetag: 22.06.1999
(51) Int. Cl.: C08F 6/00

(54) **Verfahren zur Entfernung von restflüchtigen Komponenten aus Polymerdispersionen**
Process for removing volatile residues from polymer dispersions
Procédé pour éliminer des résidus volatiles de dispersions de polymères

(30) Priorität: 24.06.1998 DE 19828183
(43) Veröffentlichungstag der Anmeldung: 29.12.1999
(73) Patentinhaber: BASF Aktiengesellschaft, 67056 Ludwigshafen (DE)
(72) Erfinder: Dobbelaar, Johannes, 67157 Wachenheim (DE); Hübinger, Wolfgang, 67117 Limburgerhof (DE); Keller, Peter, 69493 Hirschberg (DE); Stanger, Bernd, 67373 Dudenhofen (DE)
(74) Vertreter: Kinzebach, Werner

(56) Entgegenhaltungen:
- EP-A- 0 003 957
- EP-A- 0 650 977
- DE-A- 19 621 027
- DE-A- 19 741 189

## Beschreibung

Die vorliegende Erfindung betrifft ein Verfahren zur Entfernung von restflüchtigen Komponenten aus Polymerdispersionen, wobei man zunächst eine chemische Desodorierung zur Entfernung von Restmonomeren und anschließend eine physikalische Desodorierung zur Entfernung flüchtiger Bestandteile vornimmt.

Durch Emulsions- oder Suspensionspolymerisation erhaltene Polymerdispersionen oder Polymersuspensionen enthalten üblicherweise auch unerwünschte flüchtige organische Komponenten, wie Restmonomere aus einem nicht vollständigen Umsatz, Verunreinigungen aus den Einsatzstoffen, Zerfallsprodukte der Initiatoren oder niedermolekulare Produkte aus Nebenreaktionen. Diese Komponenten werden im Allgemeinen als "Restflüchtige" oder "restflüchtige Komponenten" bezeichnet.

Zur Entfernung von restflüchtigen Komponenten gibt es prinzipiell zwei Wege, nämlich die sogenannte chemische Desodorierung und die sogenannte physikalische Desodorierung. Bei der chemischen Desodorierung werden durch eine Nachpolymerisation unter Zugabe eines Initiators, der von dem in der Hauptpolymerisation verwendeten Initiator verschieden ist, die noch vorhandenen polymerisierbaren Komponenten, nämlich in erster Linie die eingesetzten Monomere, zu Oligomeren und Polymeren umgesetzt, die nicht mehr flüchtig sind. Im Allgemeinen wird dabei ein Redox-Initiatorsystem verwendet.

Die chemische Desodorierung hat den Nachteil, dass nur die polymerisierbaren restflüchtigen Komponenten beseitigt werden können. Alle gesättigten Nebenkomponenten aus Verunreinigungen der Einsatzstoffe und Nebenreaktionen der Monomeren verbleiben als Restflüchtige im Produkt. Gleichzeitig werden durch die chemische Desodorierung weitere Nebenkomponenten eingeschleppt, z. B. Aceton und t-Butanol bei Verwendung von t-Butylhydroperoxid/Acetonbisulfit und Formaldehyd und t-Butanol bei Verwendung von t-Butylhydroperoxid/Hydroxymethansulfinsäure-Natriumsalz als Redox-Initiatorsystem. Sowohl die Verunreinigungen als auch die eingeschleppten Stoffe verbleiben als restflüchtige Komponenten in der Dispersion und stören bei der Verarbeitung der Dispersion.

Bei der physikalischen Desodorierung erfolgt ein Strippen der Dispersion mit im Allgemeinen Wasserdampf in einem Rührkessel (DE 12 48 943) oder in einer Gegenstromkolonne (DE-A-196 21 027.5 und DE-197 16 373.4). Bei der physikalischen Desodorierung werden alle flüchtigen Komponenten mit einer Siedetemperatur bis etwa 200 °C ausgetragen. Zu den flüchtigen Komponenten gehören Monomere, die relativ schlecht ausreagieren und nach der Polymerisation noch in Mengen von > 1 % in der Dispersion vorhanden sein können. Bei der physikalischen Desodorierung werden diese Monomere ausgestrippt und gelangen somit ins Abwasser. Damit geht Wertprodukt verloren und außerdem muss das Abwasser aufwendig entsorgt werden. Darüber hinaus lassen sich wasserlösliche, gegebenenfalls toxische Monomere nicht ausstrippen.

Physikalische und chemische Desodorierung können auch gleichzeitig angewandt werden, wie in der US-A-4,529,753 beschrieben ist. Es hat sich jedoch gezeigt, dass dabei durch das Abstrippen von Komponenten des Redox-Initiatorsystems die Wirksamkeit der chemischen Desodorierung reduziert wird.

Ein Verfahren zur Entfernung von Restmonomeren aus Polymerdispersionen mit mindestens 50 Gew.-% Vinylacetateinheiten unter sequentieller Anwendung von chemischer und physikalischer Desodorierung ist in der EP 650 977 A beschrieben. Das Verfahren soll im Vergleich zu dem Verfahren der US-A-4,529,753 bei akzeptabler Verfahrensdauer zu geringeren Restmonomerenkonzentrationen führen. Zu diesem Zweck wird die Dispersion zunächst mit einer ausreichenden Menge eines Initiatorsystems solange behandelt, bis der Restmonomerengehalt auf 1500 bis 6000 ppm reduziert ist. Anschließend erfolgt eine physikalische Desodorierung mit Wasserdampf unter Vakuum, wobei der Restmonomerengehalt auf etwa 5 bis 500 ppm reduziert wird. Nach diesem Verfahren ist es nicht möglich, eine Restflüchtigen-Konzentration von ≤ 100 ppm zuverlässig einzuhalten, insbesondere wenn höhersiedende Monomere, wie Styrol und n-Butylacetat, zugegen sind.

Der vorliegenden Erfindung liegt daher die Aufgabe zugrunde, ein verbessertes Verfahren zur Desodorierung von Polymerdispersionen zur Verfügung zu stellen, das es erlaubt, Polymerdispersionen mit ≤ 100 ppm restflüchtigen Komponenten zuverlässig herzustellen.

Diese Aufgabe wird gelöst durch ein Verfahren zur Entfernung von restflüchtigen Komponenten aus Polymerdispersionen, worin das Polymer aufgebaut ist aus
A) 80 bis 100 Gew.-% wenigstens einem Monomer, das ausgewählt ist unter vinylaromatischen Monomeren, Estern der Acrylsäure oder der Methacrylsäure mit 1 bis 12 C-Atome aufweisenden Alkanolen, Acrylnitril, Methacrylnitril und Butadien und Gemischen davon, und
B) 0 bis 20 Gew.-% Comonomeren, die ausgewählt sind unter 3 bis 6 C-Atome aufweisenden α,β-monoethylenisch ungesättigten Mono- und Dicarbonsäuren und deren Amiden, Vinylsulfonsäure und deren wasserlösliche Salze; Monoester von C₂-C₄-Diolen mit Acrylsäure oder Methacrylsäure; und Amino-C₂-C₄-alkyl(meth)acrylaten und den N-Mono- und N,N-Dialkylderivaten davon;
wobei man zunächst eine Behandlung mit einem Redox-Initiatorsystem zur Entfernung von Restmonomeren (chemische Desodorierung) und anschließend eine Behandlung mit einem inerten Gas zur Entfernung flüchtiger Bestandteile (physikalische Desodorierung) vornimmt, dadurch gekennzeichnet, dass man als Initiator tert.-Butylhydroperoxid/Acetonbisulfit oder tert.-Butylhydroperoxid/Hydroxymethansulfinsäure-Salz in einer Menge von 0,05 bis 3 Gew.-%, bezogen auf das Gesamtgewicht der ursprünglich eingesetzten Monomere, einsetzt.

Die chemische Desodorierung wird unter Bedingungen durchgeführt, die zur Polymerisation der Restmonomere führen und beendet, sobald etwa gleich viel Restmonomere beseitigt als Nebenkomponenten in die Dispersion eingetragen werden. In vielen Fällen wird dieses Gleichgewicht erreicht, wenn 90 % der Restmonomeren entfernt worden sind. Im Allgemeinen ist dann ein Restmonomerengehalt von etwa 1200 ppm, insbesondere von etwa 900 ppm, erreicht.

Als Initiator wird t-Butylhydroperoxid/Acetonbisulfit und t-Butylhydroperoxid/Hydroxymethansulfinsäure-Salz, insbesondere das Natriumsalz eingesetzt.

Um die Bildung der freien Radikale zu steuern, wird häufig ein Übergangsmetallsalz hinzugenommen. Geeignete Salze sind beispielsweise Eisen-II- und Eisen-III-chlorid, Ammoniumeisensulfat und Vanadyl-II-sulfat.

Der Initiator wird in einer Menge von 0,05 bis 0,3 Gew.-%, bezogen auf das Gesamtgewicht der ursprünglich eingesetzten Monomere, verwendet. Die Temperatur, bei welcher die chemische Desodorierung durchgeführt wird, richtet sich nach dem verwendeten Initiator. Im Allgemeinen liegt sie im Bereich von 30 bis 100 °C, insbesondere 50 bis 80 °C.

Die chemische Desodorierung erfolgt im Allgemeinen während eines Zeitraums von etwa 10 Minuten bis etwa 60 Minuten. Vorzugsweise wird das Initiatorsystem über die im Wesentlichen gesamte Zeitdauer der chemischen Desodorierung kontinuierlich oder portionsweise zugegeben. Überraschenderweise hat sich gezeigt, dass die chemische Desodorierung auf diese Weise effektiver erfolgt als bei einer sich über nur einen Teil der Zeitdauer erstreckenden Zugabe.

Nach der chemischen Desodorierung erfolgt die physikalische Desodorierung durch Behandlung, z. B. Strippen, mit Wasserdampf oder anderen inerten Gasen, wie Luft, Stickstoff oder überkritisches Kohlendioxid, unter Bedingungen, die zur Entfernung von restflüchtigen Komponenten führen.

Die physikalische Desodorierung kann in üblichen Apparaturen und unter üblichen Bedingungen (50 bis 100 °C, 0,2 bis 1 bar) vorgenommen werden. Als besonders bevorzugt hat es sich erwiesen, die physikalische Desodorierung nach dem in der DE 12 48 943 beschriebenen Verfahren oder in einer Gegenstromkolonne durchzuführen. Diese ist vorzugsweise mit Regensiebböden und/oder Querstromsiebböden ausgestattet, wobei bevorzugt 5 bis 50 dieser Böden zur Anwendung kommen. Vorzugsweise ist die Gegenstromkolonne so ausgestaltet, dass die spezifische freie Lochfläche in den Regensiebböden 2 bis 25 % und in den Querstromsiebböden 1 bis 10 % beträgt und der mittlere Lochdurchmesser in den Regensiebböden 10 bis 50 mm und in den Querstromsiebböden 2 bis 10 mm beträgt.

Das Strippgas leitet man vorzugsweise bei einem Druck in der Kolonne von 0,1 bis 1,5 bar, insbesondere 0,2 bis 0,7 bar, im Gegenstrom zur Dispersion.

Geeignete Gegenstromkolonnen sind in der DE 196 21 027 A und DE 197 16 373 A beschrieben, auf die hiermit in vollem Umfang Bezug genommen wird.

Mit dem erfindungsgemäßen Verfahren lassen sich prinzipiell alle Polymerdispersionen und -suspensionen behandeln, die durch Emulsions- oder Suspensionspolymerisation hergestellt worden sind, und bei denen das Polymer aufgebaut ist aus:
A) 80 bis 100 Gew.-%, an wenigstens einem Monomer, das ausgewählt ist unter vinylaromatischen Monomeren, wie Styrol, α-Methylstyrol oder Vinyltoluol; Estern der Acrylsäure oder der Methacrylsäure mit 1 bis 12, vorzugsweise 1 bis 8 und insbesondere 1 bis 4 C-Atome aufweisenden Alkanolen, wie der Methyl-, Ethyl-, n-Butyl-, iso-Butyl-, t-Butyl- und 2-Ethylhexylester von Acrylsäure und Methacrylsäure; Acrylnitril und Methacrylnitril; sowie 1,3-Butadien und
B) 0 bis 20 Gew.-%, an Comonomeren, die ausgewählt sind unter 3 bis 6 C-Atome aufweisenden α,β-monoethylenisch ungesättigten Mono- und Dicarbonsäuren und deren Amiden, wie Acrylsäure, Methacrylsäure, Maleinsäure, Fumarsäure, Itaconsäure, Acrylamid und Methacrylamid, sowie Vinylsulfonsäure und deren wasserlösliche Salze; Monoester von C₂-C₄-Diolen mit Acrylsäure oder Methacrylsäure, wie Hydroxyethylacrylat und Hydroxypropylmethacrylat; und Amino-C₂-C₄-alkyl(meth)acrylaten und den N-Mono- und N,N-Dialkylderivaten davon.

Die Polymerdispersionen können auch alle üblichen Hilfs- und Zusatzstoffe enthalten, wie Emulgatoren, Schutzkolloide, mit Wasser mischbare Lösungsmittel etc.

Das erfindungsgemäße Verfahren hat den Vorteil, dass die erforderlichen Mengen an Initiator und Strippgas minimiert sind. Trotzdem ist es möglich, Polymerdispersionen mit ≤ 100 ppm, insbesondere ≤ 70 ppm und teilweise sogar ≤ 50 ppm restflüchtigen Komponenten zuverlässig herzustellen.

Die nachfolgenden Beispiele erläutern die Erfindung, ohne sie zu begrenzen.

### Beispiel 1

Es wurde eine durch Emulsionspolymerisation hergestellte n-Butylacrylat/Acrylnitril-Dispersion mit 55 Gew.-% Feststoffgehalt für Klebstoffanwendungen im Innenraum verwendet. Diese Dispersion enthielt nach der Polymerisation noch 9800 ppm restflüchtige Komponenten. Davon sind etwa 800 ppm gesättigte, nicht polymerisierbare Verunreinigungen aus den Einsatzstoffen und etwa 9000 ppm Restmonomere, hauptsächlich Butylacrylat.

Es wurde eine chemische Desodorierung mit dem Initiatorsystem t-Butylhydroperoxid/Acetonbisulfit (0,11 Gew.-% t-Butylhydroperoxid, bezogen auf die eingesetzte Monomerenmenge) bei 70 °C so lange vorgenommen, bis die Monomere um 90 %, d. h. auf 900 ppm, abgereichert waren (60 min). Dabei wurden durch das Redox-Initiatorsystem etwa 500 ppm Nebenkomponenten eingetragen.

Im Anschluss daran erfolgte eine physikalische Desodorierung durch Behandlung der Dispersion mit 25 Gew.-% Wasserdampf, bezogen auf die Dispersion, in einer Gegenstromkolonne, wie in der DE 197 16 373.4 in den Figuren beschrieben. Der Kolonnenkopfdruck war 0,3 bar. Die Summe der restflüchtigen Komponenten in der Dispersion nach einmaligem Durchlauf durch die Kolonne betrug 45 ppm.

### Beispiel 2

Es wurde eine Dispersion für die Papierbeschichtung aus Styrol/Butadien/Butylacrylat mit 50 Gew.-% Feststoffgehalt verwendet. Nach der Polymerisation enthielt die Dispersion noch 4000 ppm Restmonomere und 1000 ppm sonstige restflüchtige Komponenten aus den Einsatzstoffen und durch Nebenreaktionen.

Die chemische Desodorierung erfolgte bei 70 °C mit dem Redox-Initiatorsystem (0,18 Gew.-%, bezogen auf die eingesetzte Monomerenmenge) t-Butylhydroperoxid/Acetonbisulfit bis eine Abreicherung der Monomeren um 90 % eingetreten war (60 min). Die Dispersion enthielt dann etwa 400 ppm Monomere sowie etwa 1000 ppm Aceton und t-Butanol. Anschließend wurde eine physikalische Desodorierung wie in Beispiel 1 beschrieben durchgeführt. Die erhaltene Dispersion enthielt 55 ppm flüchtige Komponenten.

## Patentansprüche

1. Verfahren zur Entfernung von restflüchtigen Komponenten aus Polymerdispersionen, worin das Polymer aufgebaut ist aus:
A) 80 bis 100 Gew.-% wenigstens einem Monomer, das ausgewählt ist unter vinylaromatischen Monomeren, Estern der Acrylsäure oder der Methacrylsäure mit 1 bis 12 C-Atome aufweisenden Alkanolen, Acrylnitril, Methacrylnitril und Butadien und Gemischen davon, und
B) 0 bis 20 Gew.-% Comonomeren, die ausgewählt sind unter 3 bis 6 C-Atome aufweisenden α,β-monoethylenisch ungesättigten Mono- und Dicarbonsäuren und deren Amiden, Vinylsulfonsäure und deren wasserlösliche Salze; Monoester von C₂-C₄-Diolen mit Acrylsäure oder Methacrylsäure; und Amino-C₂-C₄-alkyl(meth)acrylaten und den N-Mono- und N,N-Dialkylderivaten davon;
wobei man zunächst eine chemische Desodorierung unter Verwendung eines Initiators zur Entfernung von Restmonomeren und anschließend eine physikalische Desodorierung zur Entfernung flüchtiger Bestandteile vornimmt, **dadurch gekennzeichnet, dass** man als Initiator t-Butylhydroperoxid/Acetonbisulfit oder t-Butylhydroperoxid/Hydroxymethansulfinsäure-Salz in einer Menge von 0,05 bis 0,3 Gew.-%, bezogen auf das Gesamtgewicht der ursprünglich eingesetzten Monomere, einsetzt.

2. Verfahren nach einem der vorhergehenden Ansprüche, **dadurch gekennzeichnet, dass** man den Initiator während der gesamten Zeitdauer der chemischen Desodorierung zugibt.

3. Verfahren nach einem der vorhergehenden Ansprüche, **dadurch gekennzeichnet, dass** man die physikalische Desodorierung durchführt bis die Summe aller flüchtigen Komponenten ≤ 100 ppm ist.

4. Verfahren nach einem der vorhergehenden Ansprüche, **dadurch gekennzeichnet, dass** man die physikalische Desodorierung mit Wasserdampf durchführt.

5. Verfahren nach einem der vorhergehenden Ansprüche, **dadurch gekennzeichnet, dass** man die physikalische Desodorierung in einer Gegenstromkolonne durchführt.

6. Verfahren nach Anspruch 5, **dadurch gekennzeichnet, dass** die Gegenstromkolonne mit Regensiebböden und/oder Querstromsiebböden ausgestattet ist.

7. Verfahren nach Anspruch 6, **dadurch gekennzeichnet, dass** die spezifische freie Lochfläche in den Regensiebböden 2 bis 25 % und in den Querstromsiebböden 1 bis 10 % und der mittlere Lochdurchmesser in den Regensiebböden 10 bis 50 mm und in den Querstromsiebböden 2 bis 10 mm beträgt.

8. Verfahren nach einem der Ansprüche 5 bis 7, **dadurch gekennzeichnet, dass** man den Wasserdampf bei einem Druck in der Kolonne von 0,1 bis 1,5 bar im Gegenstrom zur Dispersion führt.

## Claims

1. A process for removing residual volatiles from polymer dispersions in which the polymer has been built up from:
A) from 80 to 100% by weight of at least one monomer selected from vinylaromatic monomers esters of acrylic acid or of methacrylic acid with C₁-C₁₂-alkanols, acrylonitrile, methacrylonitrile and butadiene and mixtures thereof, and
B) from 0 to 20% by weight of comonomers selected from C₃-C₆ □,□-monoethylenically unsaturated mono- and dicarboxylic acids and their amides, vinylsulfonic acid and its water-soluble salts; monoesters of C₂-C₄ diols with acrylic or methacrylic acid; and amino C₂-C₄-alkyl (meth)acrylates and the N-monoalkyl and N,N-dialkyl derivatives thereof; by performing first chemical deodorization using an initiator to remove residual monomers and then physical deodorization to remove volatile constituents, wherein the initiator used is t-butyl hydroperoxide/acetone bisulfite or t-butyl hydroperoxide/hydroxymethanesulfinate in an amount from 0.05 to 0.3% by weight, based on the overall weight of the monomers employed originally.

2. A process as claimed in any one of the preceding claims, wherein the initiator is added throughout the period of chemical deodorization.

3. A process as claimed in any one of the preceding claims, wherein the physical deodorization is conducted until the sum of all volatile components is p 100 ppm.

4. A process as claimed in any one of the preceding claims, wherein the physical deodorization is conducted with steam.

5. A process as claimed in any one of the preceding claims, wherein the physical deodorization is conducted in a countercurrent column.

6. A process as claimed in claim 5, wherein said countercurrent column is equipped with dual-flow sieve trays and/or cross-flow sieve trays.

7. A process as claimed in claim 6, wherein the specific open area in the dual-flow sieve trays is from 2 to 25% and in the cross-flow sieve trays is from 1 to 10% and the mean perforation diameter is from 10 to 50 mm in the dual-flow sieve trays and from 2 to 10 mm in the cross-flow sieve trays.

8. A process as claimed in any of one of claims 5 to 7, wherein the steam is guided in countercurrent to the dispersion at a column pressure of from 0.1 to 1.5 bar.

## Revendications

1. Procédé pour éliminer des composants volatils résiduaires de dispersions de polymère, où le polymère est constitué :
A) de 80 à 100% en poids d'au moins un monomère qui est choisi parmi des monomères vinyl-aromatiques, des esters de l'acide acrylique ou de l'acide méthacrylique avec des alcanols comportant 1 à 12 atomes de C, de l'acrylonitrile, du méthacrylonitrile et du butadiène et leurs mélanges, et
B) de 0 à 20% en poids de comonomères qui sont choisis parmi des acides monocarboxyliques et dicarboxyliques α,β-monoéthyléniquement insaturés comportant 3 à 6 atomes de C et leurs amides, de l'acide vinylsulfonique et ses sels solubles dans l'eau, des monoesters de diols en C₂-C₄ avec de l'acide acrylique ou de l'acide méthacrylique, et des (méth)acrylates d'aminoalkyle en C₂-C₄ et leurs dérivés N-monoalkyliques et N,N-dialkyliques,
dans lequel on effectue tout d'abord une désodorisation chimique par utilisation d'un initiateur pour éliminer des monomères résiduaires et ensuite une désodorisation physique pour éliminer des composants volatils, **caractérisé en ce que**, comme initiateur, on met en oeuvre de l'hydroperoxyde de t-butyle/bisulfite d'acétone ou de l'hydroperoxyde de t-butyle/sel d'acide hydroxyméthanesulfinique en une quantité de 0,05 à 0,3% en poids, par rapport au poids total des monomères initialement mis en oeuvre.

2. Procédé suivant l'une des revendications précédentes, **caractérisé en ce qu'**on ajoute l'initiateur pendant la totalité de la durée de la désodorisation chimique.

3. Procédé suivant l'une des revendications précédentes, **caractérisé en ce qu'**on effectue la désodorisation physique jusqu'à ce que la somme de tous les composants volatils soit ≤ 100 ppm.

4. Procédé suivant l'une des revendications précédentes, **caractérisé en ce qu'**on effectue la désodorisation physique avec de la vapeur d'eau.

5. Procédé suivant l'une des revendications précédentes, **caractérisé en ce qu'**on effectue la désodorisation physique dans une colonne à contre-courant.

6. Procédé suivant la revendication 5, **caractérisé en ce que** la colonne à contre-courant est équipée de plateaux perforés formateurs de pluie et/ou de plateaux perforés à courant transversal.

7. Procédé suivant la revendication 6, **caractérisé en ce que** la surface de trou libre, spécifique, dans les plateaux perforés formateurs de pluie est de 2 à 25% et dans les plateaux perforés à courant transversal de 1 à 10% et le diamètre de trou moyen dans les plateaux perforés formateurs de pluie est de 10 à 50 mm et dans les plateaux perforés à courant transversal de 2 à 10 mm.

8. Procédé suivant l'une des revendications 5 à 7, **caractérisé en ce qu'**on guide la vapeur d'eau à une pression dans la colonne de 0,1 à 1,5 bar en contre-courant de la dispersion.
